# EUROPÄISCHE PATENTSCHRIFT

(11) **EP 1 743 829 B1**
(45) Veröffentlichungstag und Bekanntmachung des Hinweises auf die Patenterteilung: **02.09.2009**
(21) Anmeldenummer: 05015070.5
(22) Anmeldetag: 12.07.2005
(51) Int. Cl.: B62J 6/02, B62J 6/04, B62J 6/18

(54) **Beleuchtungsvorrichtung für ein Fahrrad mit zusätzlichem elektrischen Ausgang**
Lighting device on bicycle with additional electrical output
Dispositif d'éclairage pour bicyclette avec sortie électrique supplémentaire

(43) Veröffentlichungstag der Anmeldung: 17.01.2007
(73) Patentinhaber: SHIMANO INC., Osaka 590-8577 (JP)
(72) Erfinder: Kitamura, Satoshi, Kitakatsuragi-gun, Nara 636-0013 (JP)
(74) Vertreter: Grosse - Schumacher - Knauer - von Hirschhausen

(56) Entgegenhaltungen:
- EP-A- 1 391 974
- DE-A1- 4 137 323
- DE-A1- 10 147 283
- DE-U1- 20 115 825
- DE-U1-202004 009 430
- US-A1- 2002 171 543

## Beschreibung

### Technisches Gebiet

Die vorliegende Erfindung bezieht sich auf eine Beleuchtungsvorrichtung, speziell eine Fahrradbeleuchtung, an der Vorderseite eines Fahrrads, welche elektrisch mit einem Dynamo verbunden ist, um die Ausgangsleistung des Dynamos an zumindest eine elektrische Komponente zu liefern, die mit der Beleuchtungsvorrichtung verbunden ist.

### Hintergrund

In den vergangenen Jahren wurden Fahrräder mit einer Anzahl von elektrischen Geräten ausgestattet, um die unterschiedlichen Anforderungen der Nutzer zu befriedigen. Beispiele sind Leuchten, Displays, Ladegeräte für Mobiltelefone und ähnliches. An so einem Fahrrad ist es notwendig, bestimmte Leistungsmengen an die Verbraucher, wie Leuchte, Display oder Mobiltelefonlader zu verteilen. Außerdem ist es notwendig, vordefinierte Leistungssignale dauerhaft an solche Komponenten zu leiten. Während es möglich ist, jede dieser oben genannten Komponenten mit Batterien zu versehen, ist der Nachteil der Batterien darin zu sehen, dass diese regelmäßig ausgetauscht werden müssen. Und die Zahl der Komponenten steigt sogar stärker als der Energiebedarf der einzelnen Komponenten. Entsprechend ist es ein deutlicher Vorteil, jede elektrische Komponente über einen Dynamo mit seiner benötigten Energie zu versorgen. Da sich jedoch der Bedarf an elektrischer Energie von Komponente zu Komponente unterscheidet, ist jeweils ein eigener Dynamo vorgesehen. Wenn zum Beispiel ein Licht und eine Mobiltelefonladegerät an einem Fahrrad vorhanden sind, werden auch je ein Dynamo für das Licht und das Ladegerät an dem Fahrrad benötigt.

### Aufgabe in Hinblick auf den Stand der Technik

Da in herkömmlichen Fahrrädern jede Komponente ihren bestimmten Energiebedarf hat, wird jeweils ein eigener Dynamo vorgesehen.

Zum Beispiel zeigt JP 3 094 197 U eine Energieversorgungs- und Ladeeinrichtung für ein Fahrrad, wobei eine elektrische Komponente wie Mobiltelefon, ein Pager, ein Radio, ein elektronisches Notizbuch (PDA) oder eine Batterie über eine Steckverbindung und einen Gleichrichter mit einem Dynamo verbunden sind. Wenn der einzelne Dynamo eingeschaltet wird, er also in Kontakt mit dem Rad gebracht wird, liefert er ein elektrisches Signal an die angeschlossenen elektrischen Komponenten.

Da die Anzahl der elektrischen Komponenten ansteigt, muss die Anzahl der benötigten Dynamos an die Anzahl der Komponenten angepasst werden. Der Bedarf an Montagefläche, die für die Anzahl der Dynamos am Fahrradrahmen benötigt wird, steigt entsprechend, wie auch das Gewicht des Fahrrads im Gesamten. Da ein Dynamo den Strom über die Rotation eines Rades erzeugt, bedeutet eine größere Anzahl von Dynamos auch eine höhere Anstrengung des Fahrers beim Antreiben des Rades, damit so die Dyamos den Strom erzeugen. Je höher die Anstrengung des Fahrers beim Antrieb des Rades ist, desto wahrscheinlicher ist es, dass Schwankungen eine unzureichende Stromversorgung von den Dynamos an die elektrischen Komponenten verursachen.

Die Druckschrift DE 4137323 A1 offenbart eine Beleuchtungsvorrichtung mit Steckkontakten, die als Eingänge für elektrische Signale vorgesehen sind.

In der Druckschrift DE 20115825 U1 ist eine Beleuchtungsvorrichtung mit angeschlossenem Zubehör offenbart.

Die Druckschrift EP-A-1391974 offenbart eine Leistungssteuervorrichtung für ein Fahrrad mit einem Stromregler und einem Steckverbinder.

Der Oberbegriff des Anspruchs 1 ist aus Merkmalen des oben zirtierten Stands der Technick gebildet.

In Hinblick auf die Nachteile des vorhandenen Standes der Technik ist es ein Ziel der gegewärtigen Erfindung, eine möglichst effiziente und platzsparende Möglichkeit zu schaffen, eine Vielzahl von elektrischen Komponente an einen Dynamo anzuschließen und eine stabile und permanente Versorgung von dem Dynamo an die Vielzahl der Komponenten zu erzeugen, ohne eine Vielzahl von Dynamos an dem Fahrrad anzubringen.

### Lösung

Eine Beleuchtungsvorrichtung für ein Fahrrad ist elektrisch mit einem Dynamo verbunden. Diese Heleuchtungsvorrichtung enthält ein Gehäuse, welches an einem Teil des Fahrrads, insbesondere einem Teil der Gabeleinheit, des Rahmens oder des Lenkers des Fahrrads, anbringbar ist. Ein Eingangsbereich ist am Gehäuse befestigt und elektrisch mit dem Dynamo verbunden, um ein Dynamoausgangssignal vom Dynamo aufzunehmen und ein Eingangssignal auszugeben. Ein Regelkreis ist elektrisch mit dem Eingangsbereich verbunden, um das Eingangssignal in ein geregeltes Signal umzuwandeln, und ein Leuchtmittel ist elektrisch mit dem Regelkreis verbunden und beleuchtet das Umfeld. Ein Ausgangsbereich ist am besagten Gehäuse angebracht und ist elektrisch mit dem Regelkreis verbunden, um das geregelte Signal auszugeben. Der Ausgangsbereich hat wenigstens einen zusätzlichen elektrischen Ausgangsverbinder, um das geregelte Signal dauerhaft an zumindest eine zusätzliche elektrische Komponente auszugeben, welche mit dem Ausgangsbereich elektrisch verbunden ist.

Nach einem weiteren Merkmal der Erfindung ist eine Energiespeichervorrichtung innerhalb des Gehäuses angeordnet, um die Dynamoausgangsleistung, welche vom Dynamo geliefert wird, zu speichern. Die Energiespeichervorrichtung ist elektrisch mit dem Eingangsbereich und dem Regelkreis verbunden und liefert die gespeicherte Energie an den Regelkreis zu Zeiten, an denen der Dynamo keine Dynamoausgangsleistung liefert, um eine fortwährende Versorgung mit dem geregelten Signal an zumindest eine der zusätzlichen Komponenten zu gewährleisten, die an den Ausgangsbereich der Beleuchtungsvorrichtung angeschlossen ist. So gesehen, kann Energie, die vom Dynamo erzeugt wurde, auch wenn der Fahrer das Rad nicht fährt, an eine Vielzahl von elektrischen Komponenten geleitet werden, welche Energie von der Energiespeichervorrichtung, welche sich innerhalb des Gehäuses befindet, erhalten.

Mit einer solchen Beleuchtungsvorrichtung wird ein Dynamoausgangssignal in den Regelkreis geleitet, um das Dynamoausgangssignal zu regeln und einer Vielzahl von elektrischen Komponenten zuzuleiten, die mit der Beleuchtungsvorrichtung verbunden sind, wobei die Vielzahl der elektrischen Komponenten eine elektrische Komponente und zumindest eine zusätzliche elektrische Komponente beinhalten.

Der Regelkreis regelt das Dynamoausgangssignal derart, dass es von jedem einzelnen der Vielzahl der elektrischen Komponenten genutzt werden kann. Das so geregelte Dynamoausgangssignal wird über den Ausgangsbereich in einer fortwährenden und stabilen Weise an die Vielzahl der elektrischen Komponenten geleitet, ohne dass mehrere Dynamos an dem Fahrrad befestigt werden müssen. Aufgrund dieser dauerhaften Versorgung mit einem derart geregelten Dynamoausgangssignals kann eine beliebige Art von elektrischem Komponenten, insbesondere ein Mobiltelefon, ein Pager, ein elektronisches Notizbuch (PDA) oder eine Batterieladevoirichiung, an den entsprechenden elektrischen Ausgangsverbinder angeschlossen werden.

Nach einem weiteren Merkmal der Erfindung weist die Beleuchtungsvorrichtung innerhalb des Gehäuses eine Wandlerschaltung auf Die Wandlerschaltung ist dabei mit dem Eingangsbereich verbunden und empfängt die Dynamoausgangsleistung, um aus dem Dynamoausgangssignals ein Geschwindigkeitssignal zu erzeugen.

In einer besonderen Ausgestaltungsform des Erfindungsgegenstandes ist in dem Gehäuse der Beleuchtungsvorrichtung eine Steuereinheit angeordnet, wobei die Steuereinheit mit der Wandlerschaltung und dem Regelkreis verbunden ist. Die Steuereinheit erzeugt ein vereintes Signal aus dem geregelten Signal und dem aus der Wandlerschaltung stammenden Geschwindigkeitssignal. Die Steuereinheit ist ferner mit dem Ausgangsbereich verbunden, um das vereinte Signal an zumindest einen der elektrischen Ausgangsverbinder des Ausgangsbereichs weiter zu leiten. Als besonders vorteilhafte ist dabei anzusehen, dass das aus dem geregelten Signal und dem Geschwindigkeitssignal erzeugte vereinte Signal von der Steuereinheit permanent an zunündest einen der elektrischen Ausgangsverbinder des Ausgangsbereichs geleitet wird. Durch die permanente Bereitstellung des vereinten Signals kann ein beliebiges elektrisches Gerät an den entsprechenden Ausgangsverbinder angeschlossen werden, insbesondere ein Fahrradcomputer, welcher die Geschwindigkeit des Fahrrads anzeigt.

Zudem kann der Erfindungsgegenstand in dem Gehäuse eine Gleichrichterschaltung aufweisen, die elektrisch mit dem Eingangsbereich und der Energiespeichervorrichtung verbunden.

Vorteilhafterweise kann zudem innerhalb des Gehäuses der Beleuchtungseinrichtung eine mit einen Helligkeitssensor ausgestattete Helligkeitsschaltung vorgesehen sein, die ein automatisches Ein- oder Ausschalten des oder der Leuchtmittel in Abhängigkeit von der Helligkeit der Umgebung ennöglicht.

Vorteilhafterweise ist jede Komponente aus der Vielzahl der elektrischen Komponenten, welche eine elektrische Komponente und zumindest eine weitere zusätzliche elektrische Komponente umfasst, lösbar mit zumindest einem elektrischen Ausgangsverbinder des Ausgangsbereichs der Beleuchtungsvorrichtung verbunden. Dementsprechend kann jede beliebige elektrische Komponente an die Heleuchtungsvorrichtung angeschlossen oder entfemt und jede angeschlossene elektrische Komponente durch eine beliebige andere problemlos ersetzt werden. Wie bereits erwähnt, kann zumindest eine elektrische Komponente, welche an einen elektrischen Ausgangsverbinder angeschlossen ist, welcher entweder das geregelte Signal oder das vereinte Signal ausgibt, ein Fahrradcomputer und/oder ein Radio, ein Mobiltelefon, ein Pager, ein digitales Notizbuch (PDA), ein Batterieladegerät und/oder eine Beleuchtung sein. Dabei ist für den Fachmann offensichtlich, dass neben den aufgezählten auch jede andere Komponente an den Ausgangsbereich der besagten Beleuchtungsvorrichtung angeschlossen werden kann.

Nach einer weiteren Ausgestaltungsform des Erfindungsgegenstandes weist das Gehäuse der Beleuchtungsvorrichtung eine Halterung auf mit Hilfe derer es möglich ist, die Komponenten mit dem Ausgangsbereich lösbar zu verbinden. Zum anderen wird vorgeschlagen, die zumindest eine elektrische Komponente mittels eines zweiten Kabels mit dem Ausgangsbereich lösbar zu verbinden, um diese Komponente an einer von der Beleuchtungsvorrichtung entfernten Stelle am Fahrrad, wie etwa an dem Rahmen oder dem Lenker, zu befestigen.

Nach einem weiteren Erfindungsmerkmal wird vorgeschlagen, einen insbesondere in die Nabe des Vorderrades integrierten Nabendynamo zu verwenden, um ausreichend Leistung für Beleuchtungsvorrichtung zu erzeugen und um so eine dauerhafte, permanente Stromversorgung sicher zu stellen. Dabei ist der Nabendynamo mittels eines ersten Kabels mit dem Eingangsbereich verbunden. Es braucht nicht weiter ausgeführt werden, dass die Erfindung auch jeden anderen Dynamo umfasst, der geeignet ist elektrische Energie zu erzeugen.

### Wirkungsweise der Erfindung

Gemäß der Erfindung regelt ein Regelkreis das Dynamoausgangssignal derart, dass die Leistung von einer Vielzahl von elektrischen Komponenten genutzt werden kann. Das durch den Regelkreis geregelte Dynamoausgangssignal wird dabei genutzt, um eine Vielzahl von elektrischen Komponenten über den Ausgangsbereich zu steuern. Hierdurch wird die Vielzahl der elektrischen Komponenten, welche an die Beleuchtungsvorrichtung angeschlossen sind, mit einer von dem Dynamo erzeugten stabilen und permanenten Leistung versorgt, ohne eine Vielzahl von Dynamos an das Fahrrad anschließen zu müssen. Die Beleuchtungseinrichtung samt ihrer Bauteile ist dabei effizient und äußerst Platz sparend ausgestaltet.

### Kurze Beschreibung der Zeichnungen:

Es zeigen:
- Fig. 1: eine Seitenansicht eines Fahrrads gemäß der Erfindung
- Fig.2: eine Perspektivische Ansicht eines Fahrradlenkers
- Fig.3: ein Block Diagramm, welches eine innere Anordnung der Beleuchtungsvorrichtung gemäß der Erfindung zeigt,
- Fig.4: ein Block Diagramm, welches eine Ausführungsform der inneren Anordnung der Beleuchtungsvorrichtung gemäß der Erfindung, und
- Fig.5: ein Block Diagramm, welches eine Ausführungsform der inneren Anordnung der Beleuchtungsvorrichtung gemäß der Erfindung zeigt.

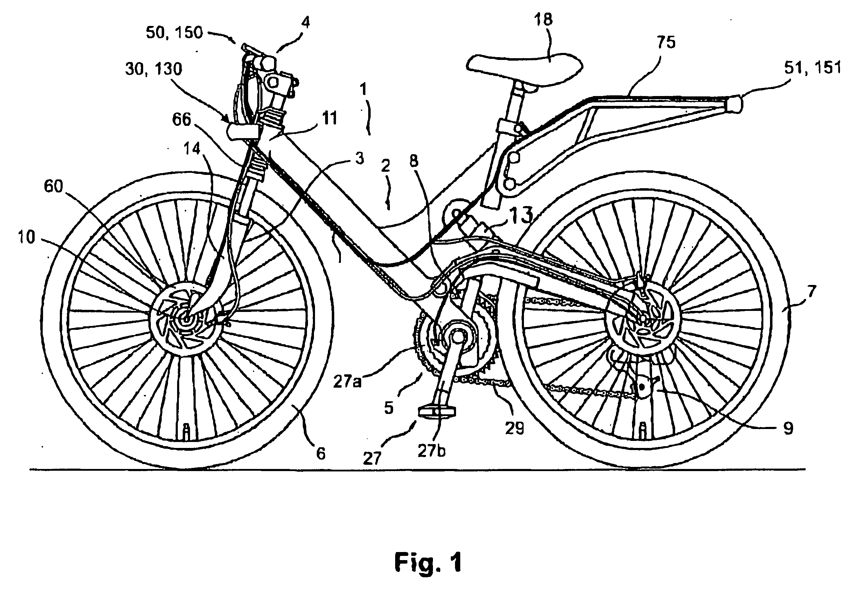

Fig.1 zeigt ein Fahrrad gemäß der Erfindung, welches ein Mountainbike mit Vorder und Hinterradaufhängung ist. Das Fahrrad umfasst einen Rahmen 1, mit einem Rahmenkörper 2 und einer Vorderhülse 11, mit einer hinteren Dämpfung 13, einer vorderen Gabel 3 mit vorderer Dämpfung 14. Ein Vorderrad 6 mit einem eingebauten Nabendynamo 10 ist in einer vorderen Gabel 3 aufgenommen, und das Hinterrad 7 ist in einen hinteren Teil des Fahrradrahmens 1 eingebaut. Eine Antriebseinheit 5 umfasst einen vorderen und hinteren Kettenumwerfer 8 und 9 und einen Kontroller (nicht gezeigt), um die unterschiedlichen Komponenten, einschließlich die vorderen und hinteren Kettenumwerfer 8 und 9 zu steuern. Fig. 1 zeigt auch eine Beleuchtungsvorrichtung 30, an welche eine Vielzahl von elektrischen Komponenten 50 anzuschließen ist.

Der Rahmenközper 2 des Rahmens 1 ist aus verschweißtem ungleichmäßig geformtem Rohr aufgebaut. Unterschiedliche Anbauteile wie der Sattel 18 und die Antriebseinheit 5 sind an dem Rahmenkörper 2 befestigt. Die Vordergabel 3 befindet sich vor dem Rahrnenkörper 2 und ist drehbar um eine schräg ansteigende Achse.

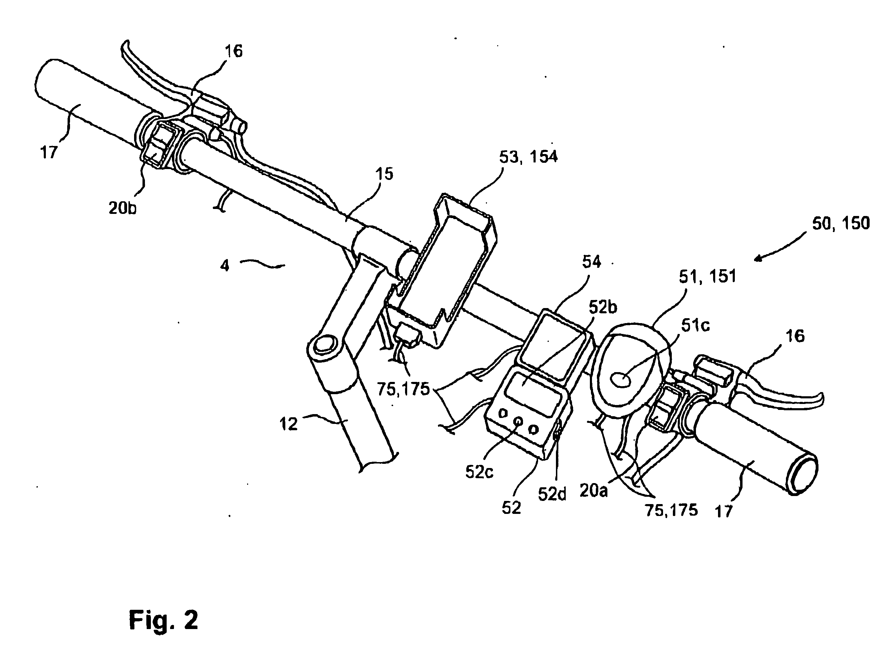

Fig. 2 zeigt den Lenker 4 mit einer Lenkerwelle 12, welche mit dem oberen Ende der Gabel 3 verbunden ist. Eine Lenkstange 15 ist mit der Lenkerwelle 12 verbunden. Bremshebel 16 und Handstücke 17 befinden sich an beiden Enden der Lenkstange 15. Im Bereich der Befestigungspunkte der Bremshebel 16 befinden sich die Kettenschalter 20b, 20a, mit denen manuell der vordere und hintere Kettenumweaer 8 und 9 betätigt werden.

Der Nabendynamo 10 des Vorderrads 6 erlaubt die Nabeninstallation der Bremsscheibe 60 der Scheibenbremse. Intern enthält der Nabendynamo 10 einen Wechselstromgenerator (nicht gezeigt), welcher beim Drehen des Vorderrads elektrische Energie erzeugt. Der Wechselstromgenerator ist über ein erstes Verbindungskabel 66 mit der Beleuchtungsvorrichtung 30 verbunden Das Hinterrad ist ein freilaufendes Rad mit einer Mehrgangschaltung.

Die Antriebseinheit 5 liegt im unteren Teil des Rahmenskörpers 2 und umfasst einen vorderen und einen hinteren Kettenüberwerfer 8 und 9 mit einer Mehrgangschaltung mit beispielsweise neun Zahnrädern. Der Kurbeltrieb 27 hat eine Getriebekurbel 27a, die an beispielsweise drei Zahnrädern angreift und einen linken Kurbclarm 27b. Die Antriebseinheit 5 weist auch eine Kette 29 auf, welche mit einem der Zahnräder des Kurbeltriebes 27 und einem der hinteren Zahnräder im Eingriff steht. In einer derartigen Antriebseinheit wird bei Betätigung der Kettenschalter 20a und 20b ein Kontrollsignal von den Kettenschaltern 20a und 20b abgegeben, und die Kette wird auf die unterschiedlichen Zahnräder des Kurbeltriebes und ein hinteres Zahnrad gelegt.

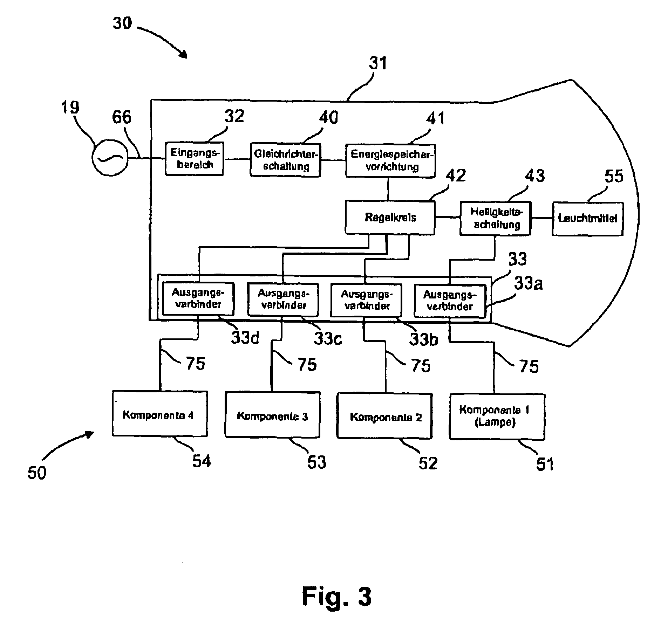

Die Beleuchtungsvorrichtung 30 ist eine Vorrichtung, um Leistung oder elektrische Signale vom Wechselstromgenerator im Nabendynamo 10 für eine Vielzahl von elektrischen Komponenten bereitzustellen. Wie in Fig.2 oder Fig. 3. gezeigt, hat die Beleuchtungsvorrichtung 30 ein. Gehäuse 31, einen Eingangsbereich 32 und einen Ausgangsbereich 33. Eine Halterung (nicht dargestellt) kann an dem Gehäuse 31 angebracht werden. Mittels dieser Halterung kann das Gehäuse 31 entfernbar an der Lenkstange 15 angebracht werden. Der Eingangsbereich 32 befindet sich am Gehäuse 31, wobei ein erstes Verbindungskabel 66 mit dem Eingangsbereich 32 verbunden ist. Das erste Verbindungskabel 66 verbindet den Eingangsbereich 32 mit dem Wechselstromgenerator 19. Der Ausgangsbereich 33 befindet sich am Gehäuse 31 und umfasst einen ersten bis einen vierten Ausgangsverbinder 33a, 33b, 33c 33d.

Wie in Fig. 3 gezeigt, sind eine Gleichrichterschaltung 40, eine Energiespeichervorrichtung 41 ein Regelkreis 42 und eine Helligkeitsschaltung 43 in der Beleuchtungsvorrichtung 30 enthalten. Die Gleichrichterschaltung 40 wandelt Wechselstromleistung von dem Wechselstromgenerator 19 über den Eingangsbereich 33 in Gleichstromleistung. Die gleichgerichtete Leistung der Gleichrichterschaltung 40 wird von der Gleichrichterschaltung 40 zu der Energiespeichervorrichtung 41 geleitet. Die Energiespeichervorrichtung 41 beinhaltet beispielsweise einen Kondensator mit hoher Kapazität und speichert die gleichgerichtete Leistung, welche durch die Gleichrichterschaltung 40 gleichgerichtet wurde.

Die Energiespeichervorrichtung 41 kann alternativ eine Nickel-Cadmium-Zelle, eine Lithium-Ionen-Zelle oder eine Nickel-Hydrogen-Zelle sein. Die gleichgerichtete Leistung, gespeichert durch die Speichervorrichtung, wird von der Energiespeichervorrichtung 41 an den Regelkreis 42 geleitet.

Der Regelkreis 42 regelt Leistung in vorbestimmte Leistung, so dass sie von einer Vielzahl von elektrischen Komponenten 50 (Lampe 51, Radio 52, Ladegerät für Mobiltelefon 53 und elektronisches Notizbuch (PDA), wie später beschrieben wird, genutzt werden kann. Der Regelkreis 42 umfasst einen Spannungsregelkreis (nicht dargestellt), welcher die Gleichspannung, bereitgestellt von der Energiaspeichervorrichtung, zu einer vordefinierten Spannung regelt, und leitet diese an den ersten elektrischen Ausgangsverbinder 33a, den zweiten elektrischen Ausgangsverbinder 33b, den dritten elektrischen Ausgangsverbinder 33c, den vierten elektrischen Ausgangsverbinder 33d und an die Helligkeitsschaltung 43. In diesem Spannungsregelkreis wird die gleichgerichtete Spannung, welche von der Energiespeichervorrichtung 41 kommt, auf beispielsweise 1,2V, 3,0V, 3,5V oder 3,7V geregelt. 1,2V ist die Ausgangsspannung zu dem ersten Ausgangsverbinder 33a. 3,0V ist die Ausgangsspannung zu dem zweiten und dritten Ausgangsverbinder 33b und 33c, 3,7V ist die Spannung zu dem vierten Ausgangsverbinder 33d und 3,5V ist die Spannung für die Helligkeitsschaltung 43. Die Helligkeitsschaltung 43 kann abhängig vom Signal eines Sensors (nicht dargestellt) Leistung kontrollieren, um automatisch ein Leuchtmittel 55 ein- und auszuschalten. Diese Helligkeitsschaltung 43 steuert die Gleichspannungsleistung, die von dem Regelkreis kommt, und leitet sie an den ersten Ausgangsverbinder 33a und an das Leuchtmittel 55 weiter, welches direkt an die Helligkeitsschaltung angeschlossen ist. Leistung, die in dieser Weise von dem Regelkreis und der Helligkeitsschaltung geregelt wurde, wird über die Ausgangsverbinder 33a, 33b, 33c und 33d an die unterschiedlichen elektrischen Komponenten 50 weitergeleitet.

Wie in Fig.2 gezeigt ist, umfasst die Vielzahl der elektrischen Komponenten zum Beispiel eine Lampe 51, ein Radio 52 ein Ladegerät 53 für ein Mobiltelefon oder ein elektronisches Notizbuch (PDA) 54. Jede Komponente aus der Vielzahl der elektrischen Komponenten 50 ist über zweite Verbindungskabel 75 entfernbar an die Beleuchtungsvorrichtung anschließbar, die zweiten Verbindungskabel verbinden jede Komponente aus der Vielzahl der Komponenten mit den entsprechenden Ausgangsverbindern 33a bis 33d. Die Lampe 51, das Ladegerät für Mobiltelefone 53 und das digitale Notizbuch (PDA) 54 sind auf der Lenkstange 15 entfernbar befestigt. Das Radio 52 hat eine LCD-Anzeige 52b und kann unterschiedliche Bänder (AM, FM etc) mit unterschiedlichen Frequenzen empfangen. Das Radio 52 bat weiter einen Wahlschalter 52c, um die unterschiedlichen Bänder und Frequenzen zu wählen und einen Lautstärkeregter 52d. Jedes Ende der zweiten Verbindungskabel 75 ist mit der Lampe 51, dem Mobiltelefonladegerät 53 oder dem digitalen Notizbuch (PDA) 54 verbunden. Das andere Ende eines zweiten Verbindungskabels 75 für die Lampe 51 ist entfernbar verbunden mit dem ersten Ausgangsverbinder 33a, das andere Ende des zweiten Verbindungskabels für das Mobiltelefonladegerät 53 ist entfernbar mit dem dritten Ausgangsverbinder 33c und das andere Ende des zweiten Verbindungskabels 75 für das digitale Notizbuch 54 ist entfernbar verbunden mit dem vierten Ende des Ausgangsverbinders 33d. Mit dieser Anordnung sind somit die Lampe 51, das Telefonladegerät 53 und das digitale Notizbuch 54 entfernbar mit dem Ausgangsbereich 33 von der Beleuchtungsvorrichtung 30 über jeweils die zweiten Verbindungskabel 75 verbunden. Die Lampe 51 hat einen Ein/Ausschalter 51c und kann mittels dieses Ein-/Ausschalters ein- und ausgeschaltet werden. Das Mobiltelefonladegerät 53 hat ein Ladeterminal (nicht dargestellt), um ein Mobiltelefon zu laden. Das Mobilteleionladegerät ist so beschaffen, dass das Ladeterminal, sobald ein Mobiltelefon in das Ladegerät 53 eingesetzt wird, mit den Kontakten eines Ladeterminals des Mobiltelefons in Kontakt kommen, um so das Mobiltelefon zu laden. Das digitale Notizbuch (PDA) 54 hat auch ein Ladeterminal (nicht dargestellt), um das digitale Notizbuch (54) zu laden. Das Ladegerät für das digitale Notizbuch (PDA) ist so beschaffen, dass, sobald ein digitales Notizbuch in das Ladegerät für das digitale Notizbuch eingesetzt wird, das Ladeterminal des digitalen Notizbuches in Kontakt mit einem Ladeterminal (nicht dargestellt) des Ladegeräts für das digitale Notizbuch kommt, um es zu laden.

Wie oben beschrieben ist, erzeugt die Helevchtungseinrichtung 30 Gleichstromleistung unter Zuhilfenahme von der Gleichrichtersahaltung 40, der gleichgerichteten Wechselspannung, und dem Wechselstrom der durch den Nabengenerator 10 erzeugt wurde und bei dem Eingangsbcrcich eingeleitet wurde. In dem 5pannungsregelkreis des Regelkreises 42 wird Gleichspannung, welche aus der Energiespeichervorrichtung 41 kommt, genutzt um vorbestimmte Spannungen zu erzeugen und sie an die Ausgangsverbinder 33a, 33b, 33c und 33d zu leiten. Die Leistung, die in dem Regelkreis 42 in dieser Weise geregelt wurde, wird durch die Ausgangsverbinder 33a, 33b, 33c und 33d an die Vielzahl der elektrischen Komponenten 50 geleitet.

Wenn eine derartige Beleuchtungsvorrichtung benutzt wird, wird die elektrische Leistung von dem Nabendynamo 10 in dem Regelkreis 42 in Leistungssignale geregelt, welche geeignet sind, um von den unterschiedlichen elektrischen Komponenten 50 genutzt zu werden.

Die Leistungssignale, welche durch den Regelkreis 42 geregelt werden, können somit über die ersten bis vierten Ausgangsverbinder 33a, 33b 33c und 33d an die Vielzahl der elektrischen Komponenten geliefert werden. Mittels einer derartigen Vorrichtung können die Leistungssignale von dem Nabendynamo dauerhaft an eine Vielzahl von elektrischen Komponenten 50 geliefert werden.

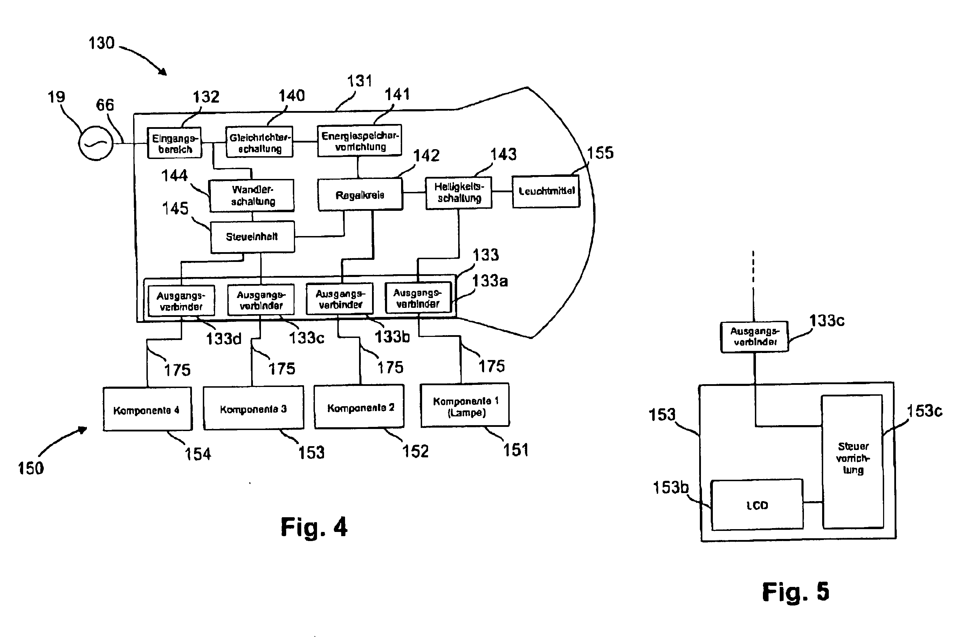

In Fig. 4 ist ein weiteres Ausführungsbeispiel der Beleuchtungsvorrichtung 30 dargestellt. Die Beleuchtungsvorrichtung 130, wie sie in Fig. 4 dargestellt ist, entspricht der Beleuchtungsvorrichtung 30 wie in Fig.3, mit der Ausnahme, dass eine Wandlerschaltung 144 in dem Gehäuse 131 enthalten ist und diese mit dem Eingangsbereich 132 verbunden ist. Weiter ist eine Steuereinheit 145 im Gehäuse enthalten und mit der Wandlerschaltung 144 und dem Regelkreis 142 verbunden.

Die Beleuchtungsvorrichtung 130 ist eine Vorrichtung, die dazu dient, Ausgangsleistungen, wie elektrische Ströme und Spannungen aus dem Wechselstromgenerator des Nabendynamos 10 zu erzeugen. Wie in Fig. 4 dargestellt, hat die Beleuchtungsvorrichtung 130 ein Gehäuse 131, einen Eingangsbereich 132 und einen Ausgangsbereich 133. Eine Haltevorrichtung (nicht dargestellt) ist am Gehäuse 131 befestigt. Mittels dieser Haltevorrichtung ist das Gehäuse 131. entfernbar an der Lenkstange 15 befestigt. Der Eingangsbereich 132 befindet sich am Gehäuse 131, wobei ein erstes Verbindungskabel 66 mit dem Eingangsbereich 132 verbunden ist. Das erste Verbindungskabel 66 verbindet den Eingangsbereich 132 mit dem Wechselstromgenerator 19. Der Ausgangsbereich 133 befindet sich am Gehäuse 131 und enthält erste bis vierte Ausgangsverbinder 133a, 133b, 133c und 133d.

Wie in Fig. 4 dargestellt, sind in dem. Gehäuse 131 der Beleuchtungsvorrichtung 130 eine Gleichrichterschaltung 140, eine Energiespeichervorrichtung 141, ein Regelkreis 142 und eine Helligkeitsschaltung 143 enthalten. Die Gleichnchterschaltung 140 wandelt Wechselstromleistung von dem Wechselstromgenerator 19, welche über den Eingangsbereich geleitet wurde, in Gleichspannungsleistung. Die gleichgerichtete Spannung der Gleichrichterschaltung 140 wird von der Gleichrichterschaltung an die Energiespeichervorrichtung geleitet. Die 6nergiespeichetvorrichtung 141 enthält beispielsweise einen Kondensator mit hoher Kapazität und speichert die Gleicbspannungsleistung, die in der Gleichrichterschaltung 140 gleichgerichtet wurde. Die Fnergiespeichervorrichtung 141 alternativ ist eine Nickel-Cadmiuxn-Zelle, eine Lithium-Ionen-Zelle oder eine Nickel-Hydrogen-Zelle.

Die gleichgerichtete Leistung, gespeichert durch die Speichervvrrichtung, wird von der E-nergiespeichervomchtung 141 an den Regelkreis 142 geleitet, wie später beschrieben wird.

Der Regelkreis 142 regelt Leistungen, Spannungen, Ströme oder dergleichen zu bestimmten Leistungen, Spannungen oder dergleichen, so dass sie von einer Vielzahl von elektrischen Komponenten 150 (Lampe 151, Radio 152, Fahrradcomputer 153 und Mobiltelefonladegerät 154) genutzt werden, wie später beschrieben wird. Der Regelkreis 142 umfasst einen Spannungsregelkreis. Die Wandlerschaltung 144 ist verbunden mit dem Eingangsbereich 132. Der Spannungsregelkreis regelt Gleichspannungsleistung, welche von der Energiespeichervorrichtung 141 kommt zu einer vorbestimmten Spannung und liefert diese zu dem ersten Ausgangsverbinder 133a, dem zweiten Ausgangsverbinder 133b, zu der Helligkeitsschaltung 143 und der Steuereinheit 145. In dieser Spannungsregelschaltung wird Gleichspannungsleistung, die von der Energiespeichervorrichtung 141 bezogen wird, auf beispielsweise 1,2V, 3,0V, 3,5V und 3,7V geregelt. 1,2V Gleichspannung wird an den ersten Ausgangsverbinder 133a geleitet. 3,0V wird an den zweiten Ausgangsverbinder 133b geleitet und 3,5 V Gleichspannung wird an die Helligkeitsschaltung geleitet. 3,7V Gleichspannung wird an die Steuereinheit 145 geleitet. Die Wandlerschaltung 144 wandelt die elektrischen Signale (Sinus-Welle), die über den Eingangsbereich von dem Wechselstromgenerator 19 kommen, in ein gepulstes Signal (Rechteck-Signal) oder Geschwindigkeitssignal um. Dieses Geschwindigkeitssignal wird von der Wandlerschaltung 144 an die Steuereinheit 145 geleitet. Die Helligkeitsschaltung 143 kann mit Hilfe eines Sensors (nicht dargestellt) Leistung kontrollieren und so automatisch Licht ein- und ausschalten. Diese Helligkeitsschaltung 143 kontrolliert vom Regelkreis erhaltene Gleichspannungsleistung, und liefert diese an den ersten Ausgangsverbinder 133a und die Lampe 141, die direkt an die Helligkeitsschaltung 143 angeschlossen ist. Die Steuereinheit 145 wird mit dem Leistungssignal von dem Regelkreis 142 und dem Geschwindigkeitssignal der Wandlerschaltung 144 versorgt und erzeugt ein vereintes Signal, welches aus dem Leistungssignal und dem Geschwindigkeitssignal besteht. Das vereinte Signal wird von der Steuereinheit an den dritten und den vierten Ausgangsverbinder 133c und 133d geleitet. Elektrische Leistung und elektrische Signale, die auf diese Weise in dem Regelkreis und der Helligkeitsschaltung geregelt werden, werden über den ersten und zweiten Ausgangsverbinder 133a und 133b an die unterschiedlichen elektrischen Komponenten 150 geleitet.

Wie in Fig. 4 gezeigt ist, umfasst die Vielzahl der elektrischen Komponenten 150 beispielsweise eine Lampe 151, ein Radio 152, einen Fahrradcomputer 153 oder ein Mobiltelefonladegerät 154.

Jede einzelne aus der Vielzahl der elektrischen Komponenten ist über zweite Verbindungskabel 175 mit der Beleuchtungsvorrichtung 130 verbunden, wobei die zweiten Verbindungskabel entfernbar mit jedem einzelnen der Vielzahl der elektrischen Komponenten und den entsprechenden Ausgangsverbindern 133a bis 133d verbunden sind.

Die Lampe 151, das Radio 152 und das Mobiltelefonladegerät 154 entsprechen den Komponenten, wie sie in der ersten Ausführungsform der Erfindung dargestellt sind. Deshalb werden diese Komponenten nicht erneut im Detail erläutert, mit Ausnahme des Fahrradcomputers 153.

Der Fahrradcomputer 153 gemäß Fig.5 hat eine LCD-Anzeige 153b, über welche diverse Arten von Fahrtinformationen dargestellt werden können. Eine Steuervorrichtung 153c befindet sich im Fahrradeomputer und umfasst einen Mikrocomputer (nicht dargestellt). Diese Steuervorrichtung leitet diverse Arten von FahrtinfQrmationen (z.B. Fahrtgeschwindigkeit, Fahrtentfernung) aus dem vereinten Signal, welches sie über den dritten Ausgangsverbinder 133c erhält, ab und stellt diese Arten von Fahrtinformationen auf dem LCD-Display 153b dar.

Wie oben beschrieben, liefert die Beleuehtungsvorrichtung 130 Gleichspannungsleistung aufgrund von der Nutzung der Gleichrichterschaltung, die Wechselspannung gleichrichtet, welche über den Eingangsbereich eingeleitet wurde und welche durch den Nabendynamo erzeugt wurde. In dem Spannungsregelkreis des Regelkreises 142 wird Gleichspannungsleistung, welche von der Energiespeichervorrichtung 141 bereitgestellt wird, zu vorbestimmten Spannungen geregelt und zu den ersten und zweiten elektrischen Ausgangsverbindern 133a und 133b, der Helligkeitsschaltung 143 und der Steuereinheit 145 geleitet. Die Beleuchtungsvorrichtung 130 wandelt also das elektrische Signal (Sinus-Welle), welches an dem Eingangsbereich von dem Wechselstromgenerator 19 im Nabendynamo bereitgestellt ist, mittels der Wandlerschaltung 144 in ein pulsiertes Signal (Rechteck-Welle) oder Geschwindigkeitssignal um. Das Geschwindigkeitssignal wird von der Wandlerschaltung 144 an die Steuereinheit 145 geleitet. Die Steuereinheit 145 wird mit dem Leistungssignal von dem Regelkreis 142 und mit dem Geschwindigkeitssignal von der Wandlerschaltung 144 versorgt und wandelt das Leistungs- und Geschwindigkeitssignal in ein vereintes Signal um, welches aus Leistungs- und Geschwindigkeitssignal besteht. Das vereinte Signal wird von der Steuereinheit an den dritten und vierten Ausgangsverbinder 133c und 133d geleitet. Leistungssignale und elektrische Signale werden in der Beleuchtungsvorrichtung 130 in dieser Art geregelt und and die ersten bis vierten Ausgangsverbinder 133a, 133b, 133c und 133d and die Vielzahl von elektrischen Komponenten geleitet. Wenn eine derartige Beleuchtungsvorrichtung 130 genutzt wird, werden die Leistungs- und elektrischen Signale, die von dem Nabendynamo erzeugt wurden, in der Beleuchtungsvorrichtung 130 in Leistungssignale und vereinte Signale so geregelt, dass sie von unterschiedlichen einzelnen elektrischen Komponenten 150 genutzt werden können. Mit Hilfe einer derartigen Anordnung können Leistungs- und elektrische Signale, welche von einem Nabendynamo 10 erzeugt wurden, beständig an eine Vielzahl von elektrischen Komponenten 150 geleitet werden.

## Patentansprüche

1. Eine Beleuchtungsvorrichtung (30;130) für ein Fahrrad (1), welche elektrisch mit einem Dynamo (10) verbunden ist, umfasst:
ein Gehäuse (31;131) welches an einem Teil des Fahrrades (1) befestigt ist, einen Eingangsbereich (32;132), welcher sich am Gehäuse (31;131) befindet und elektrisch mit dem Dynamo (10) verbunden ist, um ein Ausgangssignal des Dynamos aufzunehmen und ein Eingangssignal abzugeben,
einen Regelkreis (42;142), welcher elektrisch mit dem Eingangsbereich (32;132) verbunden ist und welcher das Eingangssignal in ein geregeltes Dynamoausgangssignal regelt,
ein Leuchtmittel (55;155) zum Beleuchten der Umgebung, welches elektrisch mit dem Regelkreis (42;142) verbunden ist,
einen Ausgangsbereich (33;133) zum Ausgeben des geregelten Signals, welcher sich an dem Gehäuse (31;131) befindet, und elektrisch mit dem Regelkreis verbunden ist,
**dadurch gekennzeichnet, dass**
der Ausgangsbereich (33;133) zumindest einen zusätzlichen elektrischen Verbinder (33b;133b) hat für die dauerhafte Ausgabe des geregelten Signals an zumindest eine zusätzliche elektrische Komponente (52,53,54;152,153,154), welche mit besagtem zusätzlichen elektrischen Verbinder (33b;133b) verbunden ist.

2. Beleuchtungsvorrichtung gemäß Anspruch 1, **dadurch gekennzeichnet, dass** sich eine Energiespeichervorrichtung (41;141) zum Speichern der vom Dynamo (10) gelieferten Energie innerhalb des Gehäuses (31;131) befindet.

3. Beleuchtungsvonichtung gemäß Anspruch 2, **dadurch gekennzeichnet, dass** die Energiespeichervorrichtung (41;141) mit dem Eingangsbereich (41:141) und dem Regelkreis (42;142) elektrisch verbunden ist und die gespeicherte Energie an den Regelkreis (42;142) abgibt.

4. Beleuchtungsvorrichtung gemäß einem der vorangehenden Ansprüche, **dadurch gekennzeichnet, dass** im Gehäuse (131) eine Wandlerschaltung (144) vorgesehen ist, welche mit dem Eingangsbereich (132) verbunden ist, um ein Geschwindigkcitssignal aus dem Dynamoausgangssignal, das sie über den Eingangsbereich erhält, zu erzeugen.

5. Beleuchtungsvorrichtung gemäß einem der vorangegangenen Ansprüche, **dadurch gekennzeichnet, dass** im Gehäuse (131) eine Steuereinheit (145) vorgesehen ist, die mit der Wandlerschaltung (144) und dem Regelkreis (142) verbunden ist, um aus dem geregelten Dynamoausgangssignal und dem Geschwindigkeitssignal ein vereintes Signal zu erzeugen.

6. Beleuchtungsvorrichtung gemäß Anspruch 5, **dadurch gekennzeichnet, dass** das durch den Regelkreis geregelte Dynamoausgangssignal dauerhaft an zumindest einen zusätzlichen elektrischen Verbinder (133b) und zu der Steuereinheit (145) geleitet wird.

7. Beleuchtungsvorrichtung gemäß einem der Ansprüche 5 oder 6, **dadurch gekennzeichnet, dass** die Steuereinheit (145) mit dem Ausgangsbereich (133) verbunden ist, um das vereinte Signal an zumindest einen zusätzlichen elektrischen Ausgangsverbinder (133c, 133d) des Ausgangsbereichs (133) zu leiten.

8. Beleuchtungsvorrichtung gemäß einem der vorangehenden Ansprüche, **dadurch gekennzeichnet, dass** das besagte vereinte Signal dauerhaft von der Steuereinheit (145) an zumindest einen zusätzlichen Ausgangsverbinder (133c;133d) des Ausgangsbereichs (133) geleitet wird.

9. Beleuchtungsvorrichtung, gemäß einem der vorangehenden Ansprüche, **dadurch gekennzeichnet, dass** eine Oleichrichterscholtung (40;140) innerhalb des Gehäuses (31;131) vorgesehen ist, die mit dem Eingangsbereich (32;132) und mit der Energiespeichervorrichtung (41;141) verbunden ist.

10. Beleuchtungsvorrchtung gemäß einem der vorangehenden Ansprüche, **dadurch gekennzeichnet, dass** im Gehäuse eine Helligkeitsschaltung (43;143) angeordnet ist, welche einen zum automatischen Ein- und Ausschaltens des Leuchtmittel (55;155) dienenden Sensor enthält.

11. Beleuchtungsvorrichtung gemäß einem der vorangehenden Ansprüche, **dadurch gekennzeichnet, dass** zumindest eine elektrische Komponente (51, 52, 53, 54; 151, 152, 153, 154) entfernbar mit zumindest einem elektrischen Verbinder (33a, 33b, 33e, 33d; 133a, 133b, 133c, 133d) des Ausgangsbereichs (33; 133) verbunden ist.

12. Beleuchtungsvorrichtung gemäß einem der vorangehenden Ansprüche, **dadurch gekennzeichnet, dass** zumindest eine der elektrischen Komponenten (153, 154), die mit dem elektrischen Ausgangsverbinder verbunden sind, ein Fahrradcomputer (153) beinhaltet.

13. Beleuchtungsvorrichtung gemäß einem der vorangehenden Ansprüche, **dadurch gekennzeichnet, dass** zumindest eine der elektrischen Komponenten (51, 52, 53, 54; 151,152), die mit zumindest einem der elektrischen Ausgangsverbinder (33a, 33b, 33c, 33d; 133a,133b,133c,133d) verbunden sind, von einem Radio (52;152) einem Mobiltelefonladegerät (53; 154), einem Pager, einem digitalen Notizbuch (54), einem Batterielader oder einer Lampe gebildet ist.

14. Beleuchtungsvorrichtung gemäß einem der vorangehenden Ansprüche, **dadurch gekennzeichnet, dass** der Dynamo (10) ein Nabendynamo ist, welcher einen Wechselstrom erzeugt.

15. Beleuchtungsvorrichtung gemäß einem der vorangehenden Ansprüche, **dadurch gekennzeichnet, dass** der Dynamo (10) mit einem ersten Verbindungskabel (66) mit dem Eingangsbereich (32;132) verbunden ist.

16. Beleuchtungsvorrichtung gemäß einem der vorangehenden Ansprüche, **dadurch gekennzeichnet, dass** zumindest eine der elektrischen Komponenten (51, 52, 53, 54; 151, 152, 153, 154) mit zumindest einer der Ausgangsverbinder (33a, 33b, 33c, 33d; 133a, 133b, 133c, 133d) mittels eines zweiten Verbindungskabels (75; 175) verbunden ist.

17. Beleuchtungsvorrichtung gemäß einem der vorangehenden Ansprüche, **dadurch gekennzeichnet, dass** zumindest eine Halterungsvorrichtung an dem Gehäuse (31, 131) angebracht ist, um zumindest eine der elektrischen Komponenten (51, 52, 53, 54; 151, 152, 153, 154) aufzunehmen.

18. Beleuchtungsvorrichtung gemäß einem der vorangehenden Ansprüche, **dadurch gekennzeichnet, dass** die Beleuchtungsvorrichtung ein Vorderlicht ist.

## Claims

1. A lighting device (30; 130) for a bicycle (1), which is electrically connected to a dynamo (10), includes:
a casing (31; 131) which is attached to a part of the bicycle (1), an input area (32; 132) which is located at the casing (31; 131) and electrically connected to the dynamo (10) in order to receive an output signal from the dynamo and to emit an input signal,
a regulator circuit (42; 142) which is electrically connected to the input area (32; 132) and which regulates the input signal into a regulated dynamo output signal,
an illuminant (55; 155) for lighting the surroundings, which is electrically connected to the regulator circuit (42; 142),
an output area (33; 133) for outputting the regulated signal, which is located at the casing (31; 131) and electrically connected to the regulator circuit,
**characterised in that**
the output area (33; 133) has at least one additional electrical connector (33b; 133b) for the permanent output of the regulated signal to at least one additional electrical component (52, 53, 54; 152, 153, 154) which is connected to said additional electrical connector (33b; 133b).

2. The lighting device according to claim 1, **characterised in that** an energy storing device (41; 141) for storing the energy supplied by the dynamo (10) is located within the casing (31; 131).

3. The lighting device according to claim 2, **characterised in that** the energy storing device (41; 141) is electrically connected to the input area (41; 141) and the regulator circuit (42; 142) and delivers the stored energy to the regulator circuit (42; 142).

4. The lighting device according to one of the preceding claims, **characterised in that** a converter circuitry (144) is provided in the casing (131), which is connected to the input area (132) for generating a speed signal from the dynamo output signal which it receives via the input area.

5. The lighting device according to one of the preceding claims, **characterised in that** a control unit (145) is provided in the casing (131), which is connected to the converter circuitry (144) and the regulator circuit (142) for generating a combined signal from the regulated dynamo output signal and the speed signal.

6. The lighting device according to claim 5, **characterised in that** the dynamo output signal, which is regulated by the regulator circuit, is permanently transmitted to at least one additional electrical connector (133b) and to the control unit (145).

7. The lighting device according to one of claims 5 or 6, **characterised in that** the control unit (145) is connected to the output area (133) for transmitting the combined signal to at least one additional electrical output connector (133c, 133d) of the output area (133).

8. The lighting device according to one of the preceding claims, **characterised in that** said combined signal is permanently transmitted from the control unit (145) to at least one additional output connector (133c; 133d) of the output area (133).

9. The lighting device according to one of the preceding claims, **characterised in that** a rectifier circuitry (40; 140) is provided within the casing (31; 131), which is connected to the input area (32; 132) and to the energy storing device (41; 141).

10. The lighting device according to one of the preceding claims, **characterised in that** a brightness circuitry (43; 143) is arranged in the casing, which contains a sensor for automatically switching the illuminant (55; 155) on or off.

11. The lighting device according to one of the preceding claims, **characterised in that** at least one electrical component (51, 52, 53, 54; 151, 152, 153, 154) is removably connected to at least one electrical connector (33a, 33b, 33c, 33d; 133a, 133b,1 33c, 133d) of the output area (33; 133).

12. The lighting device according to one of the preceding claims, **characterised in that** at least one of the electrical components (153, 154) which are connected to the electrical output connector comprises a cyclocomputer (153).

13. The lighting device according to one of the preceding claims, **characterised in that** at least one of the electrical components (51, 52, 53, 54; 151,152) which are connected to at least one of the electrical output connectors (33a, 33b, 33c, 33d; 133a, 133b, 133c, 133d) is formed by a radio (52; 152), a mobile phone charging apparatus (53; 154), a pager, a digital notebook (54), a battery charger, or a lamp.

14. The lighting device according to one of the preceding claims, **characterised in that** the dynamo (10) is a hub dynamo which generates an alternating current.

15. The lighting device according to one of the preceding claims, **characterised in that** the dynamo (10) is connected to the input area (32; 132) via a first connection cable (66).

16. The lighting device according to one of the preceding claims, **characterised in that** at least one of the electrical components (51, 52, 53, 54; 151, 152, 153, 154) is connected to at least one of the output connectors (33a, 33b, 33c, 33d; 133a, 133b, 133c, 133d) by means of a second connection cable (75; 175).

17. The lighting device according to one of the preceding claims, **characterised in that** at least one mounting device is attached to the casing (31, 131) in order to receive at least one of the electrical components (51, 52, 53, 54; 151, 152, 153, 154).

18. The lighting device according to one of the preceding claims, **characterised in that** the lighting device is a headlight.

## Revendications

1. Dispositif d'éclairage (30 ; 130) pour bicyclette (1), qui est relié électriquement à une dynamo (10), comprenant :
un boîtier (31 ; 131), qui est fixé à une partie de la bicyclette (1), une zone d'entrée (32 ; 132), qui se situe au niveau du boîtier (31 ; 131) et est reliée électriquement à la dynamo (10) pour recevoir un signal de sortie de la dynamo et émettre un signal d'entrée,
un circuit de régulation (42 ; 142), qui est relié électriquement à la zone d'entrée (32 ; 132) et qui régule le signal d'entrée en un signal de sortie de dynamo régulé,
un moyen d'éclairage (55 ; 155) servant à éclairer l'environnement, qui est relié électriquement au circuit de régulation (42 ; 142),
une zone de sortie (33 ; 133) servant à émettre le signal régulé, qui se situe au niveau du boîtier (31 ; 131) et est reliée électriquement au circuit de régulation,
**caractérisé en ce que**
la zone de sortie (33 ; 133) dispose d'au moins un connecteur électrique supplémentaire (33b ; 133b) pour l'émission permanente du signal régulé à au moins un composant électrique supplémentaire (52, 53, 54 ; 152, 153, 154), qui est relié au dit connecteur électrique supplémentaire (33b ; 133b).

2. Dispositif d'éclairage selon la revendication 1, **caractérisé en ce qu'**un dispositif d'accumulation d'énergie (41 ; 141) servant à accumuler l'énergie fournie par la dynamo (10) se trouve à l'intérieur du boîtier (31 ; 131).

3. Dispositif d'éclairage selon la revendication 2, **caractérisé en ce que** le dispositif d'accumulation d'énergie (41 ; 141) est relié électriquement à la zone d'entrée (41 ; 141) et au circuit de régulation (42 ; 142) et délivre l'énergie accumulée au circuit de régulation (42 ; 142).

4. Dispositif d'éclairage selon l'une quelconque des revendications précédentes, **caractérisé en ce qu'**un circuit convertisseur (144) est prévu dans le boîtier (131), qui est relié à la zone d'entrée (132) pour générer un signal de vitesse à partir du signal de sortie de dynamo, qu'il reçoit par le biais de la zone d'entrée.

5. Dispositif d'éclairage selon l'une quelconque des revendications précédentes, **caractérisé en ce qu'**une unité de commande (145) est prévue dans le boîtier (131), qui est reliée au circuit convertisseur (144) et au circuit de régulation (142) pour générer un signal conjugué à partir du signal de sortie de dynamo régulé et du signal de vitesse.

6. Dispositif d'éclairage selon la revendication 5, **caractérisé en ce que** le signal de sortie de dynamo régulé par le circuit de régulation est conduit en permanence à au moins un connecteur électrique supplémentaire (133b) et à l'unité de commande (145).

7. Dispositif d'éclairage selon l'une quelconque des revendications 5 ou 6, **caractérisé en ce que** l'unité de commande (145) est reliée à la zone de sortie (133) pour conduire le signal conjugué à au moins un connecteur de sortie électrique supplémentaire (133c, 133d) de la zone de sortie (133).

8. Dispositif d'éclairage selon l'une quelconque des revendications précédentes, **caractérisé en ce que** ledit signal conjugué est conduit en permanence de l'unité de commande (145) à au moins un connecteur de sortie supplémentaire (133c ; 133d) de la zone de sortie (133).

9. Dispositif d'éclairage selon l'une quelconque des revendications précédentes, **caractérisé en ce qu'**un circuit redresseur (40 ; 140), qui est relié à la zone d'entrée (32 ; 132) et au dispositif d'accumulation d'énergie (41 ; 141), est prévu à l'intérieur du boîtier (31 ; 131).

10. Dispositif d'éclairage selon l'une quelconque des revendications précédentes, **caractérisé en ce qu'**un circuit d'intensité lumineuse (43 ; 143), qui comporte un capteur servant à mettre automatiquement en et hors circuit le moyen d'éclairage (55 ; 155), est agencé dans le boîtier.

11. Dispositif d'éclairage selon l'une quelconque des revendications précédentes, **caractérisé en ce qu'**au moins un composant électrique (51, 52, 53, 54 ; 151, 152, 153, 154) est relié de manière amovible à au moins un connecteur électrique (33a, 33b, 33c, 33d ; 133a, 133b, 133c, 133d) de la zone de sortie (33 ; 133).

12. Dispositif d'éclairage selon l'une quelconque des revendications précédentes, **caractérisé en ce qu'**au moins un des composants électriques (153, 154), qui sont reliés au connecteur de sortie électrique, comporte un ordinateur de bicyclette (153).

13. Dispositif d'éclairage selon l'une quelconque des revendications précédentes, **caractérisé en ce qu'**au moins un des composants électriques (51, 52, 53, 54 ; 151, 152), qui sont reliés à au moins un des connecteurs de sortie électriques (33a, 33b, 33c, 33d ; 133a, 133b, 133c, 133d), est constitué d'une radio (52 ; 152), d'un chargeur de téléphone portable (53 ; 154), d'un pager, d'un bloc-notes numérique (54), d'un chargeur de batteries ou d'une lampe.

14. Dispositif d'éclairage selon l'une quelconque des revendications précédentes, **caractérisé en ce que** la dynamo (10) est une dynamo de moyeu, qui génère un courant alternatif.

15. Dispositif d'éclairage selon l'une quelconque des revendications précédentes, **caractérisé en ce que** la dynamo (10) est reliée à la zone d'entrée (32 ; 132) avec un premier câble de connexion (66).

16. Dispositif d'éclairage selon l'une quelconque des revendications précédentes, **caractérisé en ce qu'**au moins un des composants électriques (51, 52, 53, 54 ; 151, 152, 153, 154) est relié à au moins un des connecteurs de sortie (33a, 33b, 33c, 33d ; 133a, 133b, 133c, 133d) à l'aide d'un deuxième câble de connexion (75 ; 175).

17. Dispositif d'éclairage selon l'une quelconque des revendications précédentes, **caractérisé en ce qu'**au moins un dispositif de fixation est monté sur le boîtier (31, 131) pour loger au moins un des composants électriques (51, 52, 53, 54 ; 151, 152, 153, 154).

18. Dispositif selon l'une quelconque des revendications précédentes, **caractérisé en ce que** le dispositif d'éclairage est un feu avant.
